# EUROPEAN PATENT APPLICATION

(11) **EP 4 628 652 A1**
(43) Date of publication of application: **08.10.2025**
(21) Application number: 24168415.8
(22) Date of filing: 04.04.2024
(51) Int. Cl.: E02B 3/04, E02D 5/02, A01K 61/70, B28B 1/00, B33Y 80/00, C04B 2/00

(54) **ADDITIVE MANUFACTURING OF STRUCTURES FOR UNDERWATER SHEET PILES**

(71) Applicant: Stonereefs A/S, 7330 Brande (DK)
(72) Inventor: Brich Dam, Mikkel, 7330 Brande (DK)
(74) Representative: Nordic Patent Service A/S

(57) **Abstract**

The present invention relates to a structure (100) for attachment to associated underwater sheet pile(s) (200), said structure comprising: one or more attachments means (300), preferably one or more magnets, at least a portion made in a stone material, preferably the entire structure is made of stone material, at least a portion being additive manufactured, preferably the entire structure is additive manufactured, and wherein said structure is adapted to be arranged in the indentation of one or more underwater sheet piles.

Furthermore, the invention relates to a method for attaching a structure to a sheet pile, wherein said method comprises the steps of: providing an additive manufactured structure, providing a mounting bracket comprising at least one magnet, releasably attaching the mounting bracket by magnetic force to the one or more sheet piles by positioning said mounting bracket in an indentation of one or more sheet piles.

## Description

### FIELD OF THE INVENTION

The present invention relates to a structure for attachment to associated underwater sheet pile(s), said structure comprising: one or more attachments means, preferably one or more magnets, at least a portion made in a stone material, such as concrete, clay and/or cement, preferably the entire structure is made of stone material,
at least a portion being additive manufactured, preferably the entire structure is additive manufactured, and wherein said structure is adapted to be arranged in the indentation of said underwater sheet pile or in the indentation of array-connected underwater sheet piles.

Furthermore, the invention relates to a method for attaching a structure to a sheet pile, wherein said method comprises the steps of: providing an additive manufactured structure, providing a mounting bracket comprising at least one magnet, releasably attaching the mounting bracket by magnetic force to the one or more sheet piles by positioning said mounting bracket in an indentation of: one sheet pile and/or a plurality of connected sheet piles, preferably arrow connected, attaching the structure to the mounting bracket.

### BACKGROUND OF THE INVENTION

The aquatic biodiversity is decreasing in the waters of the entire world, and in some underwater areas the biodiversity is more or less extinct and died out due to all the destructive pollution, such as humanmade pollution and negligence of the vital aquatic life.

The diversity of the aquatic life is extremely important for the life underwater as well as the life over the water surface, so the world calls for optimized solutions within the marine biodiversity, if an acceptable and necessary biodiversity should be obtained and/or restored in the aquatic area.

Therefore, a sustainable, biodiversity improving and easily manufacturable solution is a necessity and is highly requested.

Today, some biodiversity improving solutions are known and available, however, the effect and the accessibility of the solutions are not optimal relative to the high demand and immediate need.

Hence, an improved underwater biodiversity improving solution, preferably an efficient and reliable solution, would be advantageous and in particular a more resistant, economical, sustainable solution with longevity would be advantageous.

### OBJECT OF THE INVENTION

It is an object of the present invention to provide an alternative to the prior art.

In particular, it may be seen as an object of the present invention to provide a solution, such as a structure and method, that solves the above-mentioned problems by providing a solution for improving the underwater diversity.

### DESCRIPTION OF THE INVENTION

Thus, the above-described object and several other objects are intended to be obtained in a first aspect of the invention by providing a structure for attachment to associated underwater sheet pile(s), said structure comprising:
- one or more attachments means, preferably one or more magnets,
- at least a portion made in a stone material, such as concrete, clay and/or cement, preferably the entire structure is made of stone material,
- at least a portion being additive manufactured, preferably the entire structure is additive manufactured, and
wherein said structure is adapted to be arranged in the indentation of said underwater sheet pile or in the indentation of array-connected underwater sheet piles.

The invention is particularly, but not exclusively, advantageous for providing a structure increasing, improving, establishing and/or reestablishing the biodiversity underwater in the marine area.

The structure provides a solution to create an optimal 3D printed artificial reef, such as a stone reef, wherein all kind of different aquatic cultures of life can be protected and evolve.

Moreover, the structure of the invention provides ideal habitats for marine organisms as well as animals.

Furthermore, the invention provides a structure being easily manufacturable, since the structure is preferred manufactured by additive manufacturing / 3D printing.

Additionally, the structure is efficient, reliable and resistant in the underwater area.

Also, the structure is both economical and highly sustainable with longevity.

The structure is possible and suitable to be manufactured in any desired stone material.

In the context of the present invention, "stone material" may be understood as any material made of stone or partly stone, and material possible for being additive manufactured. Stone material may be concrete, cement, clay, or the like.

The invention furthermore has the potential of being made in biomaterial such that the stone material is either combined with biomaterial or oven fully replaced by biomaterial. The biomaterial is preferably also additive manufactured.

In the context of the present invention, "additive manufacturing" may be understood as 3D printing or the like.

In the context of the present invention, "indentation" may be understood as a notch, groove, recess, or any hollow areas formed by one or more sheet piles or the like.

In the context of the present invention, "marine" or "underwater" or "aquatic" may be understood as any water related area such as the ocean, sea, rivers, flood, tide, lake, streams, channels or the like.

The water may be salt water, fresh water or any other type of water.

In the context of the present invention, "culture" may be understood as any underwater animal, organism or plant culture, preferably the culture helps to increase the underwater biodiversity.

In the context of the present invention, "arrange" may be understood as mount, position, fixate, attach or the like.

In one embodiment of the invention, the structure has a cross-section varying throughout the length of the structure.

In one embodiment of the invention, the structure has a cross-section comprising a plurality of cavities.

The embodiments are particularly, but not exclusively, advantageous for providing numerous varying sized and varying positioned protected areas within the structure.

In one embodiment of the invention, the cavities are open-ended at least in the top and/or the bottom of the structure.

The embodiment is particularly, but not exclusively, advantageous for allowing underwater cultures to enter and exit the areas in structure.

In one embodiment of the invention, the structure has an at least substantially quadrangular cross-section, preferably the structure has an at least substantially trapezial cross-section.

The embodiment is particularly, but not exclusively, advantageous for fitting into an indentation of one or more sheet piles.

In one embodiment of the invention, the structure is adapted for being attached directly or indirectly to the sheet pile(s) with at least one magnet, preferably two or more magnets.

The embodiment is particularly, but not exclusively, advantageous for providing a strong and reliable attachment solution for the underwater structure.

Furthermore, the magnets are easy to handle, which is preferred when the attachment is underwater, and the access thereby may be limited or troublesome.

Within the invention, it is preferred that the magnets are ceramic magnets. Ceramic magnets provide an attachment means also being reliable and durable in salt water.

In the context of the invention, "direct attachment" may be understood as the structure being directly attached to the one or more sheet piles.

In the context of the invention, "indirect attachment" may be understood as the structure being attached to the one or more sheet piles via an attachment element, such as a mounting bracket.

In one embodiment of the invention, the structure further comprises: a mounting bracket.

The embodiment is particularly, but not exclusively, advantageous for providing an easy and reliable attachment of the structure to the sheet pile(s).

In one embodiment of the invention, said mounting bracket is adapted for being releasably attached to the structure, and/or said mounting bracket is adapted for being releasably attached to the sheet pile(s).

The embodiment is particularly, but not exclusively, advantageous for providing a structure, which can be easily attached and detached, e.g. such that the structures can be relocated, reused, replaced, etc.

In one embodiment, the mounting brackets comprise one or more first magnets for attachment to the structure, and one or more magnets for attachment to the sheet pile(s).

The embodiment is particularly, but not exclusively, advantageous for providing a mounting bracket being easy and releasably attachable to either a sheet pile and/or to the structure.

In one embodiment of the invention, the mounting bracket is adapted for mounting the structure in an angled position.

The embodiment is particularly, but not exclusively, advantageous for providing a structure being optimally arranged. The angled position may provide an easier access for the underwater cultures of life.

In one embodiment of the invention, the mounting bracket comprises at least one magnet, preferably two or more magnets, adapted for attaching the mounting bracket to the sheet pile.

The embodiment is particularly, but not exclusively, advantageous for providing a strong and reliable attachment solution for the mounting brackets.

Furthermore, the magnets are easy to handle, which is preferred when the attachment is underwater, and the access thereby may be limited.

Within the invention, it is preferred that the magnets are ceramic magnets, such that the attachment also can be reliable in salt water.

In one embodiment of the invention, the mounting bracket, when being mounted, provides:
- a push force against at a lower attachment point, and
- a pull force from an upper attachment point.

The embodiment is particularly, but not exclusively, advantageous for proving a strong, effective and reliable attachment.

It may therefore be an advantage to angle the 3D printed structure such that upper magnets are pulling outwards and the bottom magnets are pushing inwards.

This also provides a cavity for aquatic life to search behind the structure.

In one embodiment of the invention, when mounted on sheet pile(s), a cavity is provided behind the structure:
- between the structure and the sheet pile(s), and/or
- between the mounting bracket and the sheet pile(s).

The embodiment is particularly, but not exclusively, advantageous for providing an optimal area for life of an underwater culture.

In one embodiment of the invention, the structure is inoculated and/or at least partly coated with algae and/or any other marine organism.

The embodiment is particularly, but not exclusively, advantageous for optimizing the potential of increasing and improving the underwater biodiversity.

In a second aspect, the invention further relates to a method for attaching a structure to a sheet pile, preferably said structure being a structure according to the first aspect of the invention, wherein said method comprises the steps of:
- providing an additive manufactured structure,
- providing a mounting bracket comprising at least one magnet,
- releasably attaching the mounting bracket by magnetic force to the one or more sheet piles by positioning said mounting bracket in an indentation of:
   - one sheet pile and/or
   - a plurality of connected sheet piles, preferably arrow connected,
- attaching the structure to the mounting bracket,
wherein the steps of the method can be executed in any order and/or executed simultaneously.

The second aspect of the invention is particularly, but not exclusively, advantageous for providing an optimal, easy, effective, and reliable attachment of a biodiversity improving underwater structure.

In the context of the present invention, "attach" may be understood as mount, position, fixate, arrange or the like.

In one embodiment of the invention, the method further comprises the step of: inoculating and/or coating at least partly the structure with algae and/or any other marine organism.

The embodiment is particularly, but not exclusively, advantageous for optimizing the potential of increasing and improving the underwater biodiversity.

The first and second aspect of the present invention may each be combined with any of the other aspects. These and other aspects of the invention will be apparent from and elucidated with reference to the embodiments described hereinafter.

Embodiments from the system/product should be seen as applicable to the method, and embodiments from the method should be seen as applicable for the product/system.

### DESCRIPTION OF THE DRAWING

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, whereon:
Figure 1 illustrates examples of a plurality of structures arranged on sheet piles.
Figure 2 illustrates a cross-section of a structure arranged on a sheet pile.
Figure 3 illustrates a cross-section of an angled mounting bracket.
Figure 4a illustrates a structure optimal for organisms.
Figure 4b illustrates a structure optimal for plant and animals.
Figure 5-12 illustrate plurality of examples of specific embodiments of structures.

### DETAILED DESCRIPTION OF THE INVENTION

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidicly connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

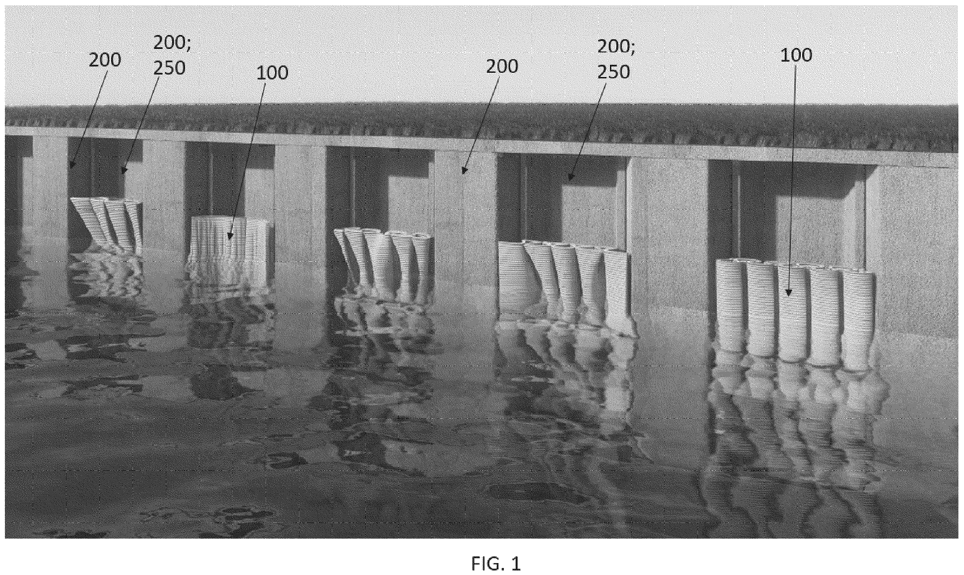

FIG. 1 illustrates examples of a plurality of structures 100 arranged on sheet piles 200. As clearly illustrated, the structure 100 within the invention can take an endless range of different forms and shapes, with different proportions and dimensions made to fit at least substantially into the indentation 250 a sheet pile 250 or an arrow of sheet piles 250.

The structures 100 may within the invention be completely covered by water or party covered as illustrated in FIG. 1.

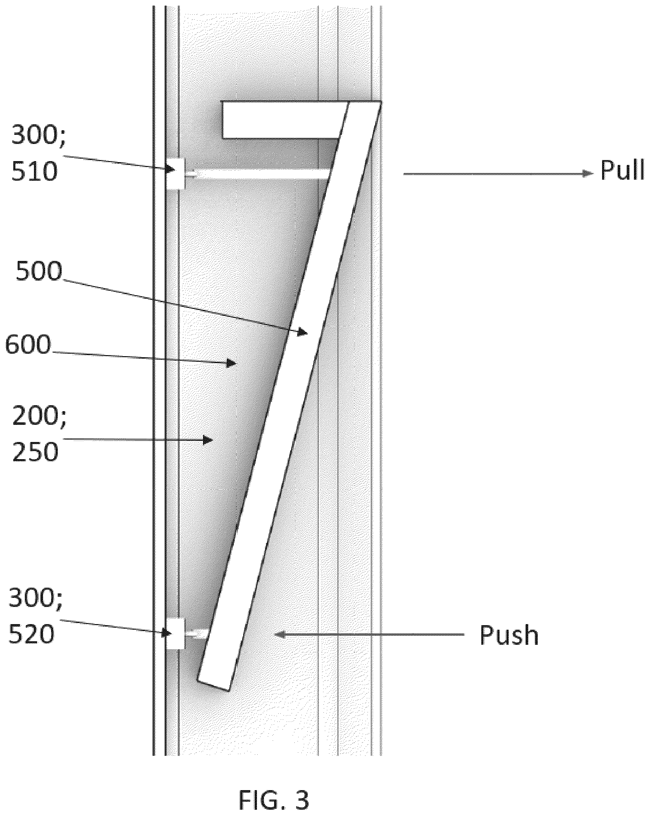

The structure 100 of the invention is as illustrated in FIG. 1 adapted for being attached directly or indirectly to the sheet pile(s) 200 with at least one magnet 300, preferably two or more magnets 300. The specific attachment is though not illustrated in FIG. 1. An indirect attachment via a mounting bracket 500 is illustrated in FIG. 3.

Within the invention, it is preferred that the attachment of one or more structures 100 to a sheet pile 200 is performed with a method comprising the steps of:
- providing an additive manufactured structure 100,
- providing a mounting bracket 500 comprising at least one magnet 300,
- releasably attaching the mounting bracket 500 by magnetic force to the one or more sheet piles 200 by positioning said mounting bracket 500 in an indentation 250 of:
   - one sheet pile 200 and/or
   - a plurality of connected sheet piles 200, preferably arrow connected,
- attaching the structure 100 to the mounting bracket 500,
wherein the steps of the method can be executed in any order and/or executed simultaneously.

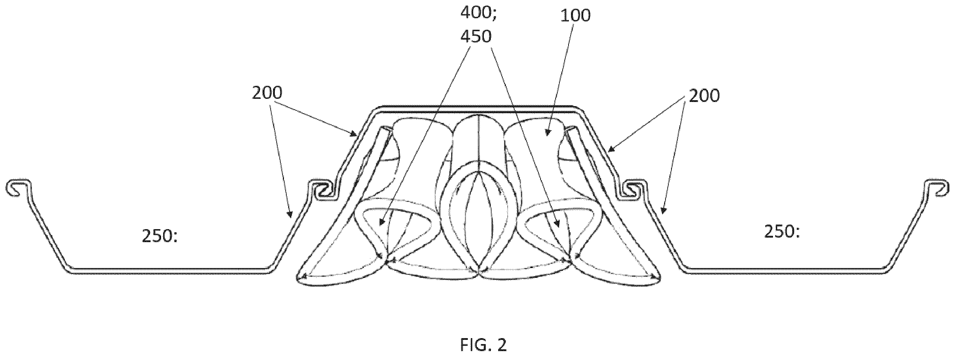

FIG. 2 illustrates a cross-section of a structure 100 arranged in an indentation 250 of an arrow of sheet piles 200.

Said structure 100 is within the invention intended for attachment to associated underwater sheet pile(s) 200, said structure comprising:
- one or more attachments means 300 (not shown in FIG. 2 - see FIG. 3), preferably one or more magnets 300,
- at least a portion made in a stone material, such as concrete, clay and/or cement, preferably the entire structure is made of stone material.
- at least a portion being additive manufactured, preferably the entire structure is additive manufactured, and
wherein said structure 100 is adapted to be arranged in the indentation of said underwater sheet pile or in the indentation of array-connected underwater sheet piles.

Throughout the figures, the structure is illustrated being made fully of concrete and being fully 3D printed / additive manufactured.

However, it should be understood that within the invention that the entire structure does not necessarily have to be fully made of stone material or being fully 3D printed. However, it is preferred that the greater part of the structure is made of stone material, and more preferably that the entire structure is made of stone material, such as concrete.

An example of a structure not being fully made of stone material could be a structure made of approx. 90% stone material combined with a part of approx. 10% biomaterial, or any other desired material.

Or approx. 80% stone material and approx. 20% biomaterial or alternative material. Or approx. 70% stone material and approx. 30% biomaterial or alternative material. Or approx. 60% stone material and approx. 40% biomaterial or alternative material. Or approx. 50% stone material and approx. 50% biomaterial or alternative material.

Moreover, it is preferred that the greater part is 3D printed, and more preferably the entire structure is 3D printed.

Furthermore, the structure 100 has an at least substantially quadrangular cross-section, and in FIG. 2 the preferred cross-section of the structure is illustrated as an at least substantially trapezial cross-section.

It should be understood that within the invention, the shape of the structure would rarely be made in straight lines, so when defining a quadrangular cross-section and/or a trapezial cross-section, it should be seen as an overall shape, and not as a perfect quadrangular or trapezial cross-section shape.

Moreover, in FIG. 2 is illustrated a structure 100 having a cross-section comprising a plurality of cavities 400. The cavities 400 are within the invention open-ended 450 at least in the top 210 and/or the bottom of the structure 220.

Also, the structure illustrated in FIG. 2 has a cross-section varying throughout the length of the structure 100.

FIG. 3 illustrates a cross-section of an angled mounting bracket 500.

It should be understood that the shape and dimension of the mounting bracket 500 should not be seen as a limitation to the invention.

Furthermore, it should be understood that the angled mounting bracket 500 is one embodiment of a bracket, however, within the invention the mounting bracket 500 can be angled, such that a structure is arranged angled in an indentation 250 of one or more sheet pile(s) 200, or the mounting bracket 500 can be non-angled, such that a structure 100 is arranged at least substantially vertical in an indentation 250 of one or more sheet pile(s) 200.

Also, it should be understood that within the invention it is preferred to mount/position/arrange/fixate/attach the structure 100 to the one or more sheet piles 200 via a mounting bracket 500, however, it is also possible to attach the structure 100 directly on the one or more sheet piles 200 with attachments means 300, such as magnets 300.

The preferred attachment means within the invention is magnets, however, it should be understood that other attachment means 300 may also be used.

In FIG. 3 the mounting bracket 500 is adapted for being releasably attached to the structure 100, and/or said mounting bracket 500 is adapted for being releasably attached to the sheet pile(s) 200, as the mounting bracket 500 of the invention comprises at least one magnet 300, preferably two or more magnets, adapted for attaching the mounting bracket 500 to the sheet pile 200. In FIG. 3 the mounting bracket 500 is illustrated with two magnets 300 for attaching the bracket 500 to the sheet pile 200.

As illustrated with arrows in FIG. 3, the mounting bracket 500 is in one embodiment of the invention arranged to provide a push force against at a lower attachment point 520 and a pull force from an upper attachment point 510.

In FIG. 3 the structure 100 being mounted on sheet pile(s) 200 provides a cavity 600 behind the structure between the mounting bracket 500 and the sheet pile(s) 200.

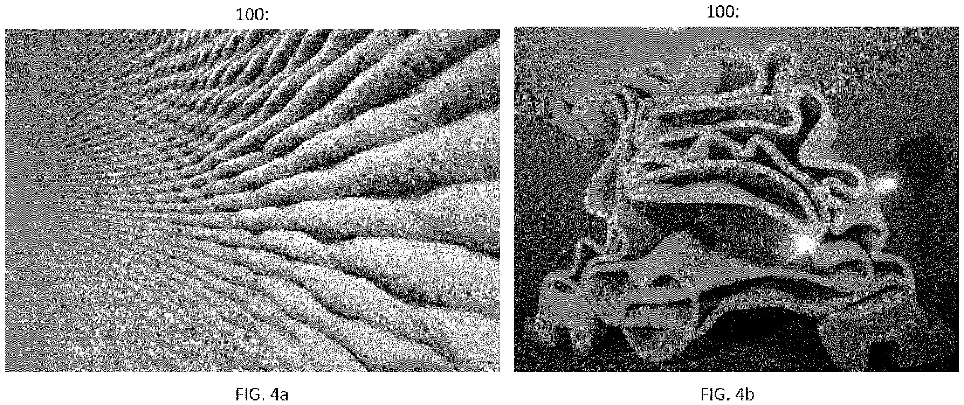

FIG. 4a illustrates a structure 100 optimal for organisms.

The structure 100 illustrated is especially ideal for being a habitat for aquatic organisms, since the texture of the structure 100 has a high surface complexity to recruitment of algae, vascular plants and other organisms.

3D printed concrete is unique for this purpose, since it already has a rough texture and further has an undulating layering.

FIG. 4b illustrates a structure optimal for plants and animals.

The structure 100 illustrated is especially ideal for being a habitat for aquatic animals, since the design is made to have a high structural complexity for e.g. fish and other animals.

It is a great advantage to benefit from the properties of the 3D printed structures to make varied cavities and surfaces along the entire structure.

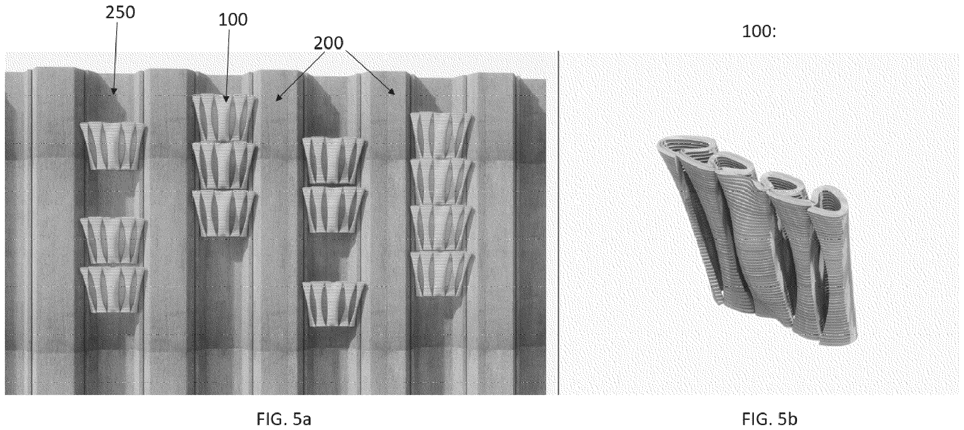

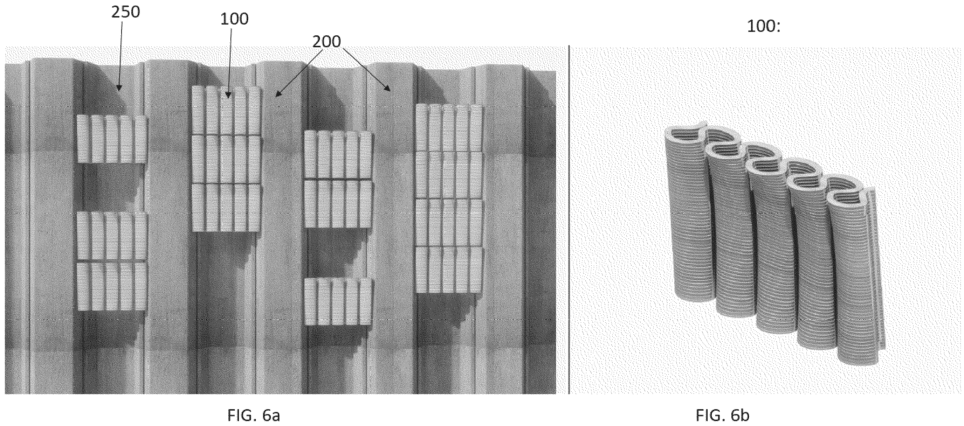

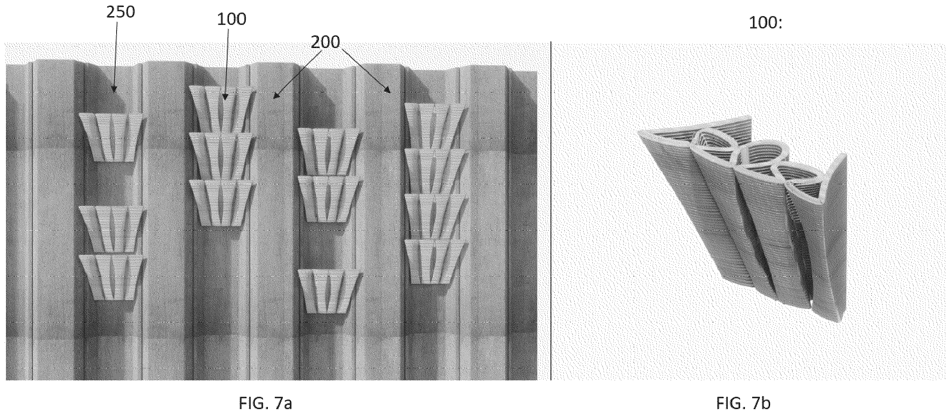

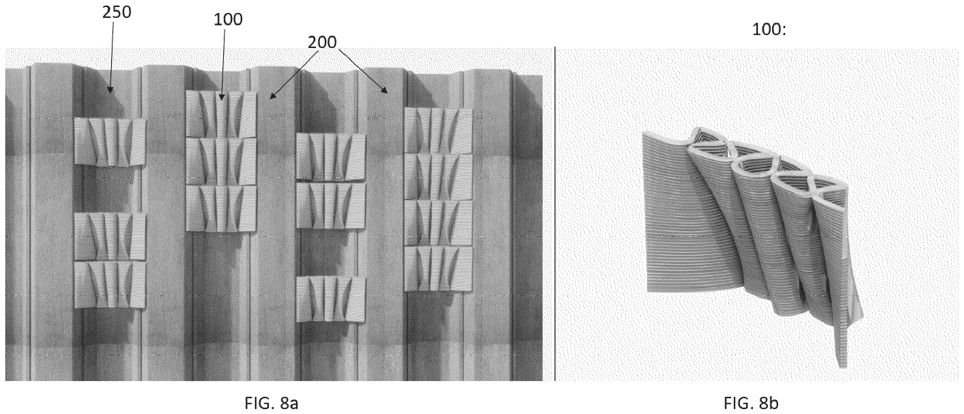

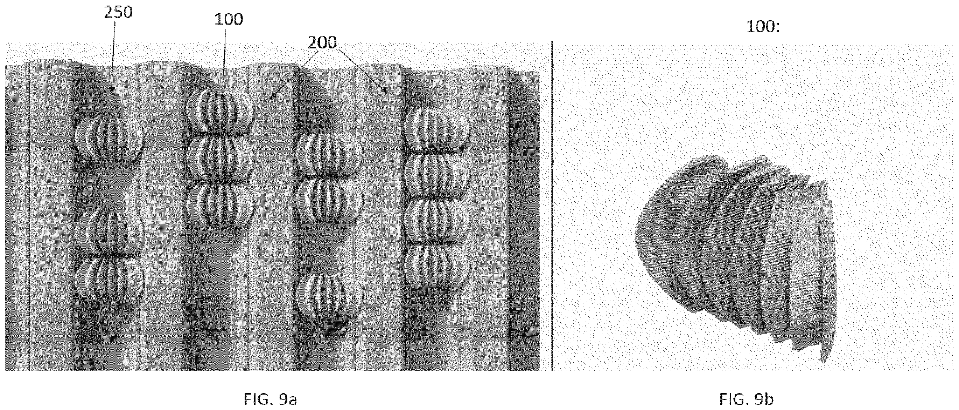

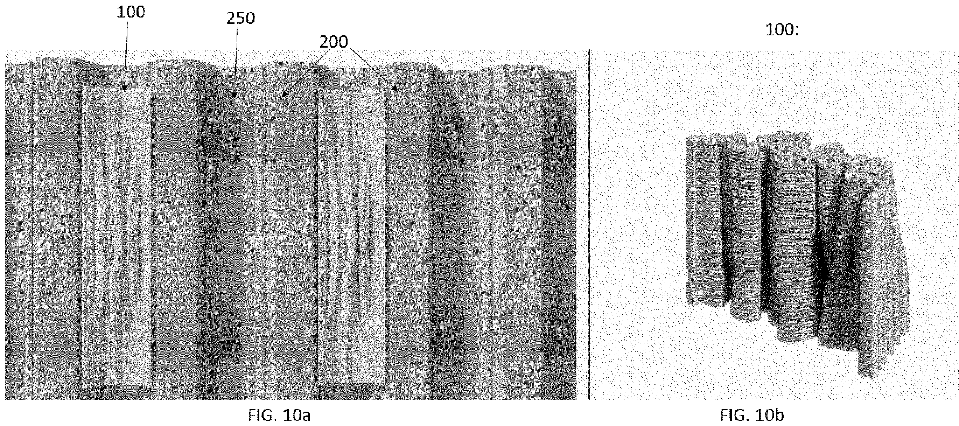

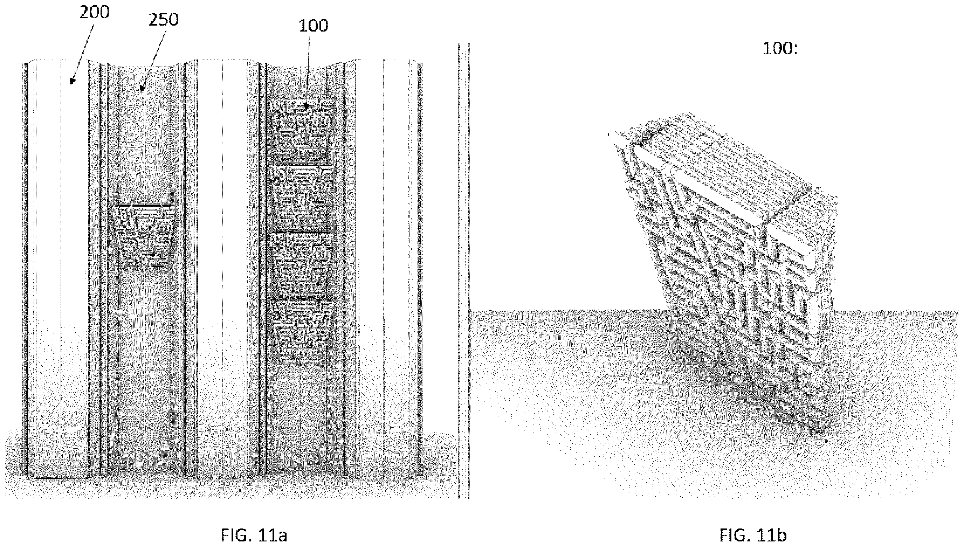

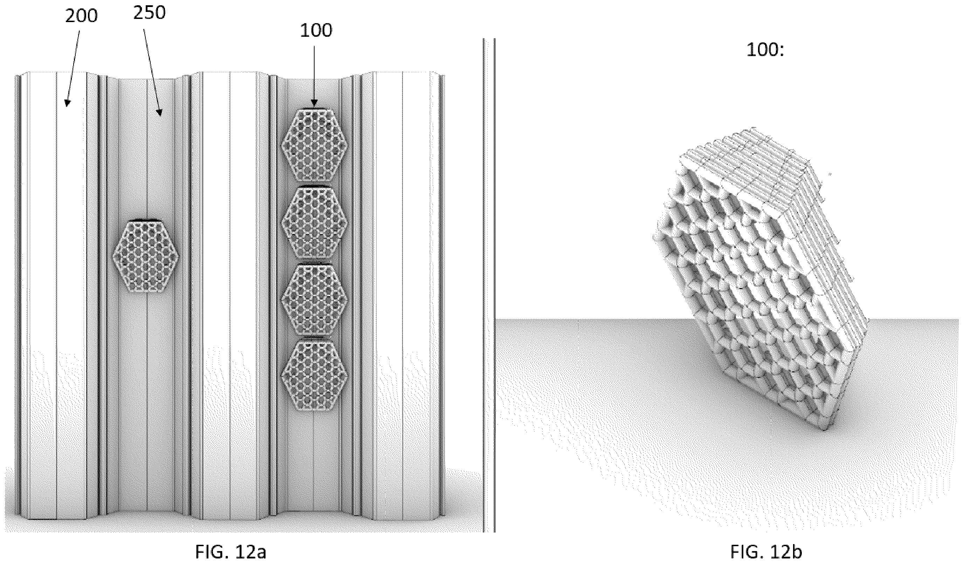

FIG. 5-12 illustrate a plurality of examples of specific embodiments of structures.

FIG. 5b, 6b, 7b, 8b, 9b, 10b, 11b, and 12b illustrate an example of a structure in a 3D perspective not attached to one or more sheet piles 200.

FIG. 5a, 6a, 7a, 8a, 9a, 10a, 11a, and 12a illustrate an example of a structure in a front view perspective, wherein a plurality of structures is attached to one or more sheet piles 200 for creating an artificial reef.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims may possibly be advantageously combined, and the mentioning of these features in different claims does not exclude that a combination of features is possible and advantageous.

### REFERENCE LIST

Structure (100)
Sheet pile(s) (200)
Top of structure (210)
Bottom of structure (220)
Indentation (250)
Length (L) of the structure
Attachments means (300)
Cavities (400) of the structure
Open-ended (450)
Mounting bracket (500).
Upper attachment point (510)
Lower attachment point (520)
Cavity (600) behind the structure

## Claims

1. **A structure (100) for attachment to associated underwater sheet pile(s) (200),** said structure comprising:
- one or more attachments means (300), preferably one or more magnets,
- at least a portion made in a stone material, such as concrete, clay and/or cement, preferably the entire structure is made of stone material,
- at least a portion being additive manufactured, preferably the entire structure is additive manufactured, and
wherein said structure (100) is adapted to be arranged in the indentation (250) of said underwater sheet pile (200) or in the indentation (250) of array-connected underwater sheet piles (200).

2. A structure (100) according to one or more of the preceding claims, wherein the structure has a cross-section varying throughout the length (L) of the structure.

3. A structure (100) according to one or more of the preceding claims, wherein the structure has an at least substantially quadrangular cross-section, preferably the structure has an at least substantially trapezial cross-section.

4. A structure (100) according to one or more of the preceding claims, wherein the structure has a cross-section comprising a plurality of cavities (400).

5. A structure (100) according to claim 4, wherein the cavities (400) are open-ended (450) at least in the top (210) and/or the bottom (220) of the structure.

6. A structure (100) according to one or more of the preceding claims, wherein the structure is adapted for being attached directly or indirectly to the sheet pile(s) (200) with at least one magnet (300), preferably two or more magnets.

7. A structure (100) according to one or more of the preceding claims, wherein the structure further comprises:
- a mounting bracket (500).

8. A structure (100) according to claim 7, wherein:
- said mounting bracket (500) is adapted for being releasably attached to the structure (100), and/or
- said mounting bracket (500) is adapted for being releasably attached to the sheet pile(s) (200).

9. A structure (100) according to one or more of claim 7 and 8, wherein the mounting bracket (500) is adapted for mounting the structure in an angled position.

10. A structure (100) according to one or more of claim 7-9, wherein the mounting bracket comprises at least one magnet (300), preferably two or more magnets, adapted for attaching the mounting bracket (500) to the sheet pile (200).

11. A structure (100) according to one or more of claim 7-10, wherein the mounting bracket (500) when being mounted provides:
- a push force against at a lower attachment point (520), and
- a pull force from an upper attachment point (510).

12. A structure (100) according to one or more of the preceding claims, wherein, when mounted on sheet pile(s) (200), a cavity (600) is provided behind the structure:
- between the structure (100) and the sheet pile(s) (200), and/or
- between the mounting bracket (500) and the sheet pile(s) (200).

13. A structure (100) according to one or more of the preceding claims, wherein the structure is inoculated and/or at least partly coated with algae and/or any other marine organism.

14. **A method for attaching a structure (100) to one or more sheet piles (200),** preferably said structure being a structure according to one or more of claims 1-13, wherein said method comprises the steps of:
- providing an additive manufactured structure (100),
- providing a mounting bracket (500) comprising at least one magnet (300),
- releasably attaching the mounting bracket (500) by magnetic force to the one or more sheet piles (200) by positioning said mounting bracket in an indentation (250) of:
- one sheet pile (200) and/or
- a plurality of connected sheet piles (200), preferably arrow connected,
- attaching the structure (100) to the mounting bracket (500),
wherein the steps of the method can be executed in any order and/or executed simultaneously.

15. A method according to claim 14, wherein the method further comprises the step of:
- inoculating and/or coating at least partly the structure (100) with algae and/or any other marine organism.
